# EUROPEAN PATENT SPECIFICATION

(11) **EP 3 052 356 B1**
(45) Date of publication and mention of the grant of the patent: **24.02.2021**
(21) Application number: 14847454.7
(22) Date of filing: 26.09.2014
(51) Int. Cl.: B60W 30/165, G05D 1/02, G08G 1/00

(54) **SYSTEM AND METHOD FOR CONTROLLING A VEHICLE PLATOON WITH A COMMON POSITION-BASED DRIVING STRATEGY**
SYSTEM UND VERFAHREN ZUR STEUERUNG EINER FAHRZEUGFLOTTE MIT EINER GEMEINSAMEN POSITIONSBASIERTEN FAHRSTRATEGIE
SYSTÈME ET PROCÉDÉ DE COMMANDE D'UN CONVOI DE VÉHICULES PAR UNE STRATÉGIE COMMUNE DE CONDUITE BASÉE EN GÉOLOCALISATION

(30) Priority: 30.09.2013 SE 1351129
(43) Date of publication of application: 10.08.2016
(73) Proprietor: Scania CV AB, 151 87 Södertälje (SE)
(72) Inventor: ALAM, Assad, S-121 31 Enskededalen (SE); LIANG, Kuo-Yun, S-127 45 Skärholmen (SE); PETTERSSON, Henrik, S-141 73 Segeltorp (SE)
(74) Representative: Scania CV AB
(86) International application number: PCT/SE2014/051119
(87) International publication number: WO 2015/047178

(56) References cited:
- WO-A1-2014/090675
- DE-A1-102006 003 625
- DE-A1-102008 026 686
- US-A- 5 331 561
- US-A- 6 032 097
- US-A1- 2010 256 835
- US-A1- 2013 030 606
- US-A1- 2013 079 953
- US-A1- 2013 080 019
- US-A1- 2013 211 624
- NÉMETH, B. ET AL.: 'Optimised speed profile design of a vehicle platoon considering road inclinations.' IET INTELL. TRANSP. SYST. vol. 8, no. 3, 2014, pages 200 - 208, XP006048216

## Description

### Technical area

The present invention relates to a system and a method to determine a position-based driving strategy for a vehicle platoon.

### Background to the invention

The intensity of traffic is high on major roads in Europe, and it is expected to increase. The increased transport of people and goods not only gives rise to traffic problems in the form of traffic queues, it also requires ever-increasing amounts of energy, which eventually gives rise to the emission of, for example, greenhouse gases. One possible contribution to solving these problems is to allow vehicles to be driven closer together in what are known as "vehicle platoons". The term "vehicle platoon" is here used to denote a number of vehicles with short distances between them, being driven as a single unit. The short distances lead to it being possible for more traffic to use the road, and the energy consumption for an individual vehicle will be reduced since the drag is reduced. The vehicles in the vehicle platoon are driven with at least one of an automated control of the speed of the vehicle and an automated control of its direction. This leads to vehicle drivers such as truck drivers being subject to a reduced load, accidents based on erroneous human decisions being reduced, and the possibility of reducing fuel consumption.

Studies show that the fuel consumption of the leading vehicle in the vehicle platoon can be reduced by 2 to 10%, and that of the following vehicle by 15 to 20%, from the fuel consumption of a vehicle driving alone. This is the case in conditions in which the distance between the trucks is 8-16 meters and that they are travelling at 80 km/h. The reduced fuel consumption gives a corresponding reduction in the emission of CO₂.

Drivers are already using this well-known fact, which has a reduced traffic safety as a consequence. One fundamental question related to vehicle platoons is how the time gap between vehicles can be reduced from the recommended 3 seconds to a value between 0.5 and 1 second, without affecting traffic safety. With distance sensors and cameras, the reaction time of the driver can be eliminated. This is a type of technology that is already being used today by systems such as ACC (adaptive cruise control) and LKA (lane-keeping assistance). One limitation, however, is that distance sensors and cameras require a clear view of the target, and this makes it difficult to detect events that lie more than a pair of vehicles ahead in the queue. A further limitation is that cruise-control systems cannot act proactively, i.e., the cruise-control system cannot react to events that occur further in advance in the traffic that are going to affect the traffic rhythm.

One possibility to enable vehicles to act proactively is to arrange that the vehicles communicate in order to be able to exchange information between them. One development of the IEEE-standard 802.11 for WLAN (wireless local area networks) known as "802.11p" makes possible the wireless transfer of information between vehicles, and between vehicles and infrastructure. Different types of information, such as vehicle parameters and strategies, can be transmitted to and from the vehicles. The development of communication technology, thus, has made it possible to design vehicles and infrastructure that can interact and act proactively. Vehicles can act as a unit and thus a shorter distance between them, and better global traffic flow, are made possible.

The driving strategy for the vehicle in a vehicle platoon is most often designed such that the distance between two neighbouring vehicles is to be held constant. If, for example, the vehicle in front increases its speed, and thus the distance between the vehicle in front and the subsequent vehicle increases, the subsequent vehicle must increase its speed such that the desired, constant distance between the said vehicles can be maintained. A corresponding driving strategy applies for reductions in speed.

When driving strategies in which the distance between the vehicles is to be kept constant are used, changes in speed occur in principle at the same time, and such a change is therefore known as a "synchronous" regulation in speed. This driving strategy functions well on a straight road with limited topography, but such a driving strategy will not be optimal on a road with a more complex topography with bends and hills. The situation, however, becomes more complex when a fuel-optimal driving strategy is to be drawn up for a complete vehicle platoon. Further aspects that must be considered are that the driving strategy allows the vehicle platoon to be driven in a safe manner, by preventing, for example, the risk of tipping for the vehicles; and that it must also be comfortable for the driver in the vehicle to drive the vehicle or to travel with the vehicle in cases in which the vehicle is automatically control. In a bend, for example, synchronous speed regulation means that if the first vehicle increases its speed immediately at the end of the bend, then also the second vehicle and the subsequent vehicles will start to increase their speed in the bend, which is negative from the point of view of both safety and comfort.

If such a driving strategy, i.e. that the distance to the vehicle in front is to be held constant, is applied in hilly terrain, it will lead to increased fuel consumption for these vehicles. This is the case since the vehicle in front will increase its speed when it has passed the crown of the hill, while subsequent vehicles that have not yet reached the crown of the hill will also increase their speeds since the distance between neighbouring vehicles is to be held constant.

The object of the present invention is to provide an improved driving strategy for vehicle platoons such that the vehicle platoon can be driven in a fuel-efficient manner when the vehicle platoon is driven in hilly terrain. The object of the present invention, however, is also to ensure that the vehicle platoon is driven in a safe manner, and that the driver experiences driving the vehicle as comfortable, either through manually controlling the vehicle or in the case in which the vehicle is automatically control.

US6032097 A discloses a vehicle platoon comprising a system for calculating/planning for each vehicle in the vehicle platoon a positon for which the speed is determined.

### Summary of the invention

The objects stated above are achieved with the invention defined by the independent patent claims.

Preferred embodiments are defined by the dependent claims.

In general, the invention relates to a common position-based driving strategy for vehicle platoons, and where the driving strategy is particularly useful when the vehicle platoon is driven in bends and in hilly terrain.

According to a first aspect, the objects described above are at least partially achieved through a system to control a vehicle platoon that comprises at least one lead vehicle and one additional vehicle, each of which has a positioning unit and a unit for wireless communication. A driving profile for at least one vehicle fₖ in the vehicle platoon is determined, wherein the driving profile contains target values bᵢ and associated positions pᵢ for the vehicle fₖ at positions along a road horizon of the road ahead. Further, a common position-based driving strategy for the vehicles in the vehicle platoon is determined, based at least on the driving profile for the vehicle fₖ; and the vehicles are control according to the driving strategy, wherein the said target values are applied for each one of the vehicles at each of the positions that is associated with a target value.

According to a second aspect, the objects described above are at least partially achieved through a method to control a vehicle platoon that comprises at least one lead vehicle and one additional vehicle, each of which has a positioning unit and a unit for wireless communication.

The method comprises to determine a common position-based driving strategy adapted to be applied for all vehicles in the vehicle platoon along a road horizon for the road ahead of the vehicle platoon, wherein the driving strategy comprises a driving profile comprising target values bᵢ and associated positions pᵢ, and to pass the driving strategy to all vehicles that are members of the vehicle platoon, after which the vehicles in the vehicle platoon are control according to the driving strategy, and wherein the said target values are applied to each one of the vehicles at each position that is associated with a target value. The determination of a common driving strategy can take place either in any of the vehicles, such as the first vehicle, or in a local node (such as a calculation centre), or in a central unit.

The determination of position can take place in a number of different manners, such as with the aid of at least one of GPS, radar, and wireless communication. Thus, through the vehicle platoon having a common driving profile for the vehicles that are members of the vehicle platoon for the bend or hill, and through this being a position-based driving strategy, this means that for the vehicles that are members of the vehicle platoon that the same driving strategy can be applied for all vehicles. At the same time, the vehicle platoon is maintained such that it is driven as a unit and it is thus more fuel-efficient, since the distance between the vehicles is maintained during the complete journey, which gives a maximum reduction in air resistance and in this way a lower fuel consumption.

The driving strategy position is thus, according to the present invention, position-based. This means that if the first vehicle in the vehicle platoon changes its speed (for example, if it increases its speed or reduces its speed) at a certain position X in a bend, the second vehicle does not carry this out at the same time (synchronously), but carries it out instead at exactly the same point X at which the first vehicle carried out the change.

It is possible to obtain knowledge of the position in several different ways, for example with the aid of GPS or wireless communication between either or both of the vehicles and infrastructure, or with the aid of radar to calculate the distance to the vehicle in front and subsequently to calculate the position.

The subsequent vehicles carry out the same manoeuvre and do not change their speed until they also have reached the point X in the bend.

Thus, fuel-efficiency, safety (through, for example, a lower risk of tipping), and comfort for driver are all improved by the application of the invention.

### Brief description of drawings

The invention will be described below with reference to the attached drawings, of which:
Figure 1 shows an example of a vehicle platoon that is travelling up a hill.
Figure 2 shows an example of a vehicle platoon that is travelling around a bend.
Figure 3 shows an example of a vehicle fₖ in the vehicle platoon and illustrates how it may be equipped.
Figures 4A-4C show different examples of the design of the system.
Figure 5 shows a flow diagram for the method according to one embodiment of the invention.

### Detailed description of preferred embodiments of the invention

### Definitions

LAC (look-ahead cruise control): a cruise-control system that uses information about the topography of the road ahead, and calculates an optimal driving profile in the form of a speed trajectory for a vehicle. Also known as a "predictive cruise-control system".

PLAC (Pre-emptive look-ahead cruise controller): a pre-emptive cruise-control system for vehicles that attempts to adjust the speed profile in the LAC such that collisions can be avoided and fuel saved. The regulatory strategy is determined by, for example, model predictive control (MPC) in order to be able to maintain the distance between the vehicles in the vehicle platoon in a fuel-efficient manner.

vₖ: the speed of vehicle fₖ in the vehicle platoon with N vehicles.

d_{k,k+1} - the distance between vehicle fₖ and the vehicle behind it fₖ₊₁ in the vehicle platoon.

αₖ: the gradient at vehicle fₖ.

V2V-communikation (vehicle-to-vehicle): wireless communication between vehicles, also known as vehicle-to-vehicle communication.

V2I-communication (vehicle-to-infrastructure): wireless communication between vehicles and infrastructure, such as road junctions and computer systems.

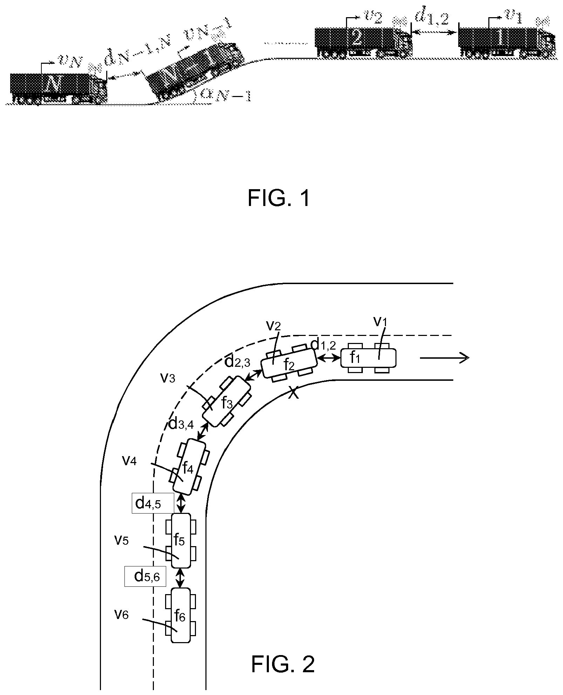

Figure 1 shows a vehicle platoon with N heavy vehicles fᵢ that is driving with small spaces d_{k, k+1} between the vehicles, and that is driving up a hill. The gradient at vehicle fₖ when it drives over the hill is shown as αₖ. Each vehicle fₖ is equipped with a receiver and a transmitter for wireless signals, partially shown with an aerial. The vehicles fₖ in the vehicle platoon can thus communicate with each other through V2V-communication, and to infrastructure by V2I-communication. The vehicles in the vehicle platoon can also, for example, exchange data with each other through the mobile telephone network. The receiver and the transmitter can thus be configured to receive and transmit data through the mobile telephone network. The different vehicles fₖ have different masses mₖ. Each of the vehicle platoons has a lead vehicle, which is normally the first vehicle. Each vehicle fₖ in the vehicle platoon has, for example, a unique vehicle identity and a vehicle platoon identity that is common for the complete vehicle platoon, in order to be able to maintain knowledge of which vehicles are members of the vehicle platoon. Data that are transmitted between the vehicles in the vehicle platoon can be tagged with these identities such that the vehicle of origin of the data that are received can be determined.

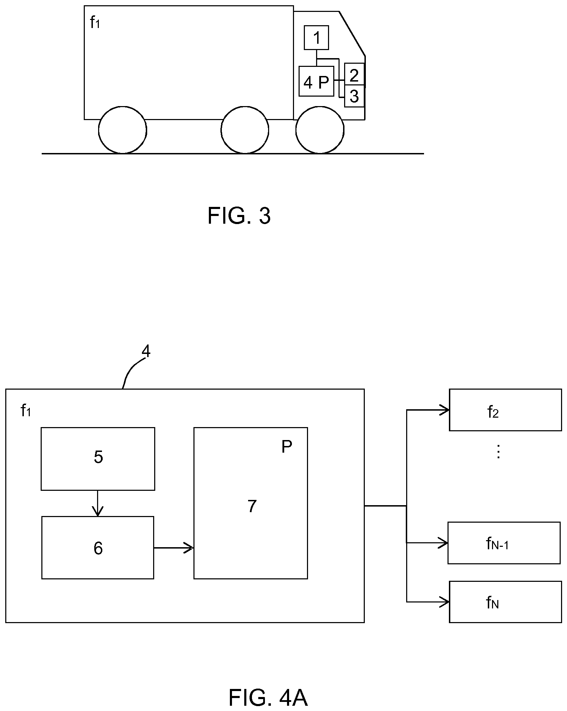

Figure 2 shows a vehicle platoon with N=6 heavy vehicles fᵢ that, similarly to the example shown in Figure 1, is driving with small spaces d_{k k+1} between the vehicles, but which is, instead, driving around a bend. Also in this case is each vehicle fₖ equipped with a receiver and a transmitter 2 (Figure 3) for wireless signals, and can communicate through, for example, V2V-communication and V2I-communication.

Figure 3 shows an example of a vehicle fₖ in the vehicle platoon and illustrates how it may be equipped. The vehicle fₖ is equipped with a positioning unit 1 that can determine the position of the vehicle fₖ. The positioning unit 1 may be, for example, configured to receive signals from a global positioning system such as GNSS (Global Navigation Satellite System), for example GPS (Global Positioning System), GLONASS, Galileo or Compass. Alternatively, the positioning unit 1 may be configured to receive signals from, for example, one or several detectors in the vehicle that measure relative distances to, for example, a road junction, vehicles in the surroundings, or similar entities, with known positions. Based on the relative distances, the positioning unit 1 can subsequently determine the position of the vehicle fₖ. A detector may be configured also to detect a signature in, for example, a road junction, wherein the signature represents a certain position. The positioning unit 1 may in this case be configured to determine its position through detection of the signature. The positioning unit 1 may instead be configured to determine the signal strength of one or several signals from several base stations or road junctions, or base stations and road junctions, etc., with known positions, and in this way to determine the position of the vehicle fₖ by triangulation. The position of the vehicle fₖ can in this way be determined. Of course, the technologies described above may be combined in order to determine the position of vehicle fₖ.
The positioning unit 1 is configured to generate a positioning signal that contains the position of the vehicle fₖ, and to transmit this signal to one or several units in the vehicle fₖ. The vehicle fₖ is, as has been mentioned above, equipped also with a unit 2 for wireless communication. The unit 2 is configured to function as receiver and transmitter of wireless signals. The unit 2 can receive at least one of wireless signals from other vehicles and wireless signals from infrastructure around the vehicle fₖ, and it can transmit at least one of wireless signals to other vehicles and wireless signals to infrastructure around the vehicle fₖ. The wireless signals can comprise vehicle parameters from other vehicles, for example their mass, torque developed, speed, and also more complex information such as, for example, the currently used driving profile, driving strategy, etc. The wireless signals may contain also information about the surroundings, such as the gradient of the road, its curvature, etc. The vehicle fₖ may be equipped also with one or several detectors 3 in order to detect the surroundings, for example a radar unit, a laser unit, a gradient gauge, acceleration gauge, steering wheel measure, a gyro, etc. These detectors are generally labelled in Figure 3 as a detector unit 3, but they may be constituted by several different detectors located at different locations in the vehicle. The detector unit 3 is configured to determine a parameter, such as a relative distance, speed, gradient, lateral acceleration, rotation, steering wheel measure, etc., and to generate a detector signal that contains the parameter. The detector unit 3 is further configured to transmit the detector signal to one or several units in the vehicle fₖ. The vehicle may be equipped also with a map unit (not shown in the drawings) that can provide map information about the road ahead. The driver may, for example, specify a final position and the map unit can then, given that it has knowledge of the current position of the vehicle, provide relevant map data about the road ahead between the current position and the final destination.

The vehicle fₖ communicates internally between its various units through, for example, a bus, such as a CAN bus (controller area network), which uses a message-based protocol. Examples of other communication protocols that can be used are TTP (time-triggered protocol), Flexray, etc. Signals and data as described above can in this way be exchanged between various units in the vehicle fₖ. Signals and data can instead be transferred in a wireless manner, for example, between the various units.

It is possible to use different driving strategies along a journey. When driving on essentially straight roads and in terrain that is not hilly, a driving strategy is preferably used in which the distance between the vehicles is held essentially constant. When the vehicle platoon approaches a bend or a hill, the driving strategy is changed at a point along road to a driving strategy according to the invention.

There is also a system 4, fully or partially in the vehicle fₖ, that will be described below with reference to Figures 4A-4C, which show various examples of the system 4. The system 4 is generally for the object of controlling the vehicle platoon, and to establish a common driving strategy for the complete vehicle platoon, for example, one based on information about the road ahead. The system 4 to is particularly intended to control the vehicle platoon when it encounters any one of hills and bends. By establishing a common driving profile that applies to the complete vehicle platoon, a well organised vehicle platoon is achieved in which consideration is taken of what is best for the complete vehicle platoon when driving in a hill and in a bend, or when driving in a hill or in a bend.

Thus, the invention relates to a system 4 to control a vehicle platoon that comprises at least one lead vehicle and one additional vehicle, each of which has a positioning unit 1 and a unit 2 for wireless communication. The system 4 comprises a driving profile unit 6 that is configured to determine a driving profile for at least one vehicle fₖ in the vehicle platoon, wherein the driving profile contains target values bᵢ and associated positions pᵢ for the vehicle fₖ at positions along a road horizon of the road ahead. The system further comprises an analysis unit 7 that is configured to determine a common position-based driving strategy for the vehicles in the vehicle platoon, based on at least the driving profile for the vehicle fₖ; to generate a driving strategy signal that indicates the driving strategy, and to transmit the driving strategy signal to all vehicles in the vehicle platoon, after which the vehicles in the vehicle platoon are control according to the driving strategy, wherein the said target values are applied to each one of the vehicles at each position that is associated with a target value.

The said target values bᵢ may comprise at least one of speed targets vₖ, acceleration targets aₖ and separation targets dₖ.

One simple example is illustrated in Figure 2 where X marks a position pᵢ along the road horizon of the vehicle platoon. The position pᵢ has, according to the driving strategy, an associated target speed vₖ. In the drawing, vehicle 2 passes the position pᵢ and is therefore to be control such that it is driven with speed vₖ. When the vehicle 3 passes the position pᵢ, this vehicle is to be driven with speed vₖ, etc. There are, of course, several positions along the road horizon with associated target speeds. There are preferably several positions with associated target speeds along road horizons with bends and in hilly terrain, i.e. where the speed varies, than there are in sections of road where the speed does not vary so much.

According to one embodiment, the driving profile unit 6 is configured to determine the driving profile for a vehicle fₖ in the vehicle platoon, preferably the lead vehicle, comprising the said target values bᵢ and the associated positions pᵢ for the vehicle fₖ at positions along the horizon and that said analysis unit is adapted to allow these to constitute the said common position-based driving strategy.

Figure 4A shows a block diagram of the embodiment in which the lead vehicle comprises the driving profile unit 6 and the analysis unit 7.

The driving strategy that is applied may be a predictive cruise-control strategy (LAC). In this case, the system 4 comprises a horizon unit 5 that is configured to determine a road horizon for at least one vehicle fₖ in the vehicle platoon with the aid of positional data and map data for a road ahead, which road horizon contains one or several properties of the road ahead.
It is preferably the lead vehicle that determines the predictive cruise-control strategy and passes the driving strategy, with the target values and associated positions, to the vehicles behind.

In the cases in which the lead vehicle determines the driving strategy, independently of which driving strategy that is applied, a number of different examples may be given of how the driving strategy is passed to other vehicles.

According to one example, the lead vehicle passes the driving strategy to all subsequent vehicles in the vehicle platoon at the same time. This example is schematically illustrated in Figure 4A.

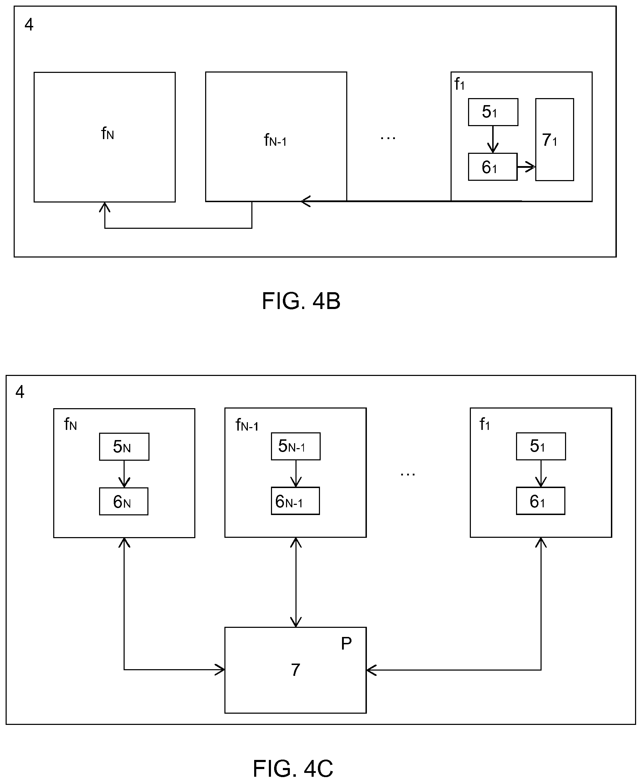

According to another example, the lead vehicle passes the driving strategy to the subsequent vehicle. This vehicle in turn passes it to the next subsequent vehicle, etc., until the last vehicle in the vehicle platoon receives the driving strategy. This example is schematically illustrated in Figure 4B.

A further example is illustrated in the block diagram in Figure 4C. In this example, the analysis unit is arranged in an external unit in the infrastructure around the vehicle platoon. In the example that is illustrated, all vehicles are equipped with a horizon unit and a driving profile unit. In such a case, the analysis unit 7 determines which driving profile is to be applied for the vehicle platoon. A variant of this example is one in which at least one vehicle, which is not necessarily the lead vehicle, determines a driving profile that is subsequently applied by the complete vehicle platoon.

According to one embodiment of the system, the driving profile unit 6 is configured to determine continuously the current actual speed of the lead vehicle. This speed may be control by a known cruise-control system of some type, or through the lead vehicle being driven manually. The positioning unit of the lead vehicle is configured to determine positions that are associated with the actual speed, and to allow the current speed to constitute the said target value bᵢ, which, together with the associated position pᵢ, constitutes the driving strategy. The driving strategy is passed to all vehicles in the vehicle platoon, either at the same time to all vehicles, or sequentially, i.e. to the vehicle behind, which passes it to the next vehicle, etc., which is control according to the driving strategy.

The application of a position-based driving strategy according to the present invention means that the distances between the vehicles in the vehicle platoon must be allowed to vary. In order to avoid situations arising in which the distances between vehicles become too short, the driving strategy comprises a distance parameter d_{k,k+1} related to the distance to a vehicle in front in the vehicle platoon. The position-based driving strategy allows the distance between the vehicles in the vehicle platoon to vary between predetermined distance values related to the speed of the vehicle. If the distance falls below a minimum distance, the driving strategy ensures that the distance does not fall below this minimum distance by, for example, reducing the target speed.

It is the case for all embodiments that the positioning unit 1 may comprise in itself one or several units to determine the position values for the driving strategy. It comprises, for example, a unit for position determination by GPS, or a corresponding system, a unit for measuring the distance to a vehicle in front, using, for example, radar. Also either or both of the wireless communication to other vehicles (V2V) and the wireless communication to infrastructure (V2I) can be used to determine the position values.

The analysis unit 7, the driving profile unit 6 and the horizon unit 5 may be constituted by one or several processor units and one or several memory units. A processor unit may be constituted by a CPU (central processing unit). The memory unit may comprise a transient or a non-transient memory or it may comprise a transient and a non-transient memory, such as flash memory or RAM (random access memory). The processor unit may be a part of a computer or a computer system, for example an ECU (electronic control unit), in a vehicle.

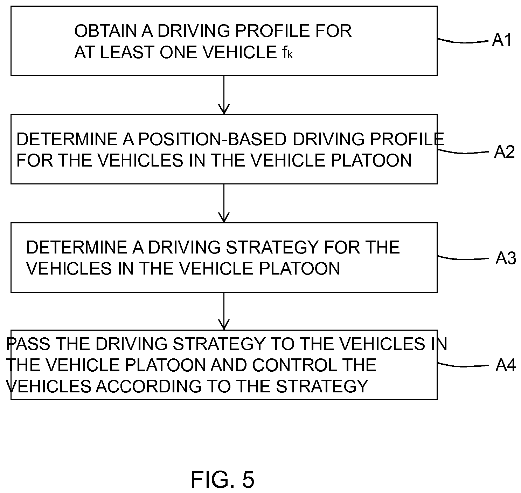

The invention relates to also a method to control a vehicle platoon that comprises at least one lead vehicle and one additional vehicle, each of which has a positioning unit and a unit for wireless communication. The method will now be described with reference to the flow diagram in Figure 5, and with reference to relevant parts of the description of the system given above.

The method comprises to:
- determine a common position-based driving strategy adapted to be applied for all vehicles in the vehicle platoon along a road horizon for the road ahead of the vehicle platoon, wherein the driving strategy comprises a driving profile comprising target values bᵢ and associated positions pᵢ, (A1, A2, A3)
- pass the driving strategy to all vehicles in the vehicle platoon, after which the vehicles in the vehicle platoon are control according to the driving strategy, wherein the said target values are applied to each one of the vehicles at each position that is associated with a target value (A4).

The method preferably comprises to determine the driving profile for a vehicle fₖ, for example the lead vehicle, in the vehicle platoon, which driving profile comprises the said target values bᵢ and associated positions pᵢ for the vehicle fₖ at positions along the road horizon, and to allow these to constitute the said common position-based driving strategy.

The driving strategy is, according to one embodiment, a predictive cruise-control strategy (LAC).

According to one application, the lead vehicle continuously determines its current speed and associated position, and allows the said current speed to constitute the said target value bᵢ, which, together with the associated position pᵢ, constitutes the driving strategy, and the lead vehicle passes this to all vehicles in the vehicle platoon, which are control according to the driving strategy. In association with the above description of the system, various examples of how the driving strategy can be passed to other vehicles in the vehicle platoon are given.

The distance between the vehicles is allowed to vary during the application of the driving strategy. For this reason, the driving strategy comprises a distance parameter d_{k,k+1} related to the distance to a vehicle in front in the vehicle platoon. The position-based driving strategy allows the distance between the vehicles in the vehicle platoon to vary between predetermined distance values related to the speed of the vehicle.

As has been discussed above, the positioning unit is configured to determine the position values pᵢ for the driving strategy with the use of GNSS, GPS, GLONASS, Galileo or Compass and any one of radar and wireless communication.

Other embodiments that also can be applied as method have been described in association with the description of the system.

The invention includes also a computer program P and a computer program product comprising a programme code adapted cause the system 4 to carry out the method steps that are described in this application. The computer program is stored on a medium that can be read by a computer, a computer program product that may be, for example, a CD disc.

The present invention is not limited to the preferred embodiments described above. Various alternatives, modifications and equivalents can be used. The embodiments above are, therefore, not to be considered as limiting the protective scope of the invention, which is defined by the attached claims.

## Claims

1. A system (4) to control a vehicle platoon that comprises at least one lead vehicle and one additional vehicle, wherein the vehicles in the vehicle platoon are driven with short distance between each other such that the air resistance between each vehicle comprised in the vehicle platoon is reduced so that lower fuel consumption is obtained, and wherein each vehicle in the vehicle platoon has a positioning unit (1) and a unit (2) for wireless communication, wherein the system (4) comprises:
- a driving profile unit (6) that is configured to determine a driving profile for at least one vehicle fₖ in the vehicle platoon, wherein the driving profile contains target values bᵢ and associated positions pᵢ for the vehicle fₖ at positions along a road horizon of the road ahead;
**characterised in that** the system further comprises:
- an analysis unit (7) that is configured to:
- determine a common position-based driving strategy for the vehicles in the vehicle platoon, based on at least the driving profile for the vehicle fₖ;
- generate a driving strategy signal that indicates the common position-based driving strategy, and
- transmit the driving strategy signal to all vehicles in the vehicle platoon, after which the vehicles in the vehicle platoon are controlled according to the common position-based driving strategy, wherein the said target values are applied to each one of the vehicles at each position (pᵢ) that is associated with a target value (bi), wherein position based driving strategy means that if the first vehicle in the vehicle platoon changes its speed at a certain position X in a bend, the second vehicle does not carry this out at the same time, but carries it out instead at exactly the same point X at which the first vehicle carried out the change.

2. The system according to claim 1, wherein the said vehicle fₖ is the lead vehicle.

3. The system according to any one of claims 1-2, wherein the said driving strategy is a predictive cruise-control strategy (LAC).

4. The system according to claim 1, comprising that the driving profile is configured to determine continuously for the lead vehicle its current speed and that the positioning unit is adapted to determine the associated position, and to allow the said current speed to constitute the said target value bᵢ, which, together with the associated position, constitutes the driving strategy, and to pass this to all vehicles in the vehicle platoon, which are controlled according to the driving strategy.

5. The system according to any one of claims 1-4, wherein the driving strategy comprises a distance parameter d_{k,k+1} related to the distance to a vehicle in front in the vehicle platoon, and the said position-based driving strategy allows the distance between the vehicles in the vehicle platoon to vary between predetermined distance values related to the speed of the vehicle.

6. The system according to any one of claims 1-5, wherein the position values for the driving strategy are adapted to be determined by the positioning unit (1) by GPS and at least one of radar and wireless communication.

7. The system according to any one of claims 1-6, wherein the said target values bᵢ comprise at least one of speed targets vₖ, acceleration targets aₖ and separation targets dₖ.

8. A method to control a vehicle platoon that comprises at least one lead vehicle and one additional vehicle, wherein the vehicles in the vehicle platoon are driven with short distance between each other such that the air resistance between each vehicle comprised in the vehicle platoon is reduced so that lower fuel consumption is obtained, and wherein each vehicle in the vehicle platoon, has a positioning unit (1) and a unit (2) for wireless communication, wherein the method comprises to:
- determine (A2) a driving profile for at least one vehicle fₖ in the vehicle platoon, wherein the driving profile contains target values bᵢ and associated positions pᵢ for the vehicle fₖ at positions along a road horizon of the road ahead;
**characterised in that** the method further comprises to:
- determine (A3) a common position-based driving strategy adapted to be applied for all vehicles in the vehicle platoon along the road horizon, wherein the driving strategy comprises the said driving profile;
- pass (A4) the driving strategy to all vehicles in the vehicle platoon, after which the vehicles in the vehicle platoon are controlled according to the common position-based driving strategy, wherein the said target values are applied for each one of the vehicles in the vehicle platoon at each position (pᵢ) associated with a target value (bi), wherein position based driving strategy means that if the first vehicle in the vehicle platoon changes its speed at a certain position X in a bend, the second vehicle does not carry this out at the same time, but carries it out instead at exactly the same point X at which the first vehicle carried out the change.

9. The method according to claim 8, wherein the said vehicle fₖ is the lead vehicle.

10. The method according to any one of claims 8-9, wherein the said driving strategy is a predictive cruise-control strategy (LAC).

11. The method according to any one of claims 8-10, comprising that the lead vehicle determines continuously its current speed and associated position, and to allow the said current speed to constitute the said target value bᵢ, which, together with the associated position, constitutes the driving strategy, and to pass this to all vehicles in the vehicle platoon, which are controlled according to the driving strategy.

12. The method according to any one of claims 8-11, wherein the driving strategy comprises a distance parameter d_{k,k+1} related to the distance to a vehicle in front in the vehicle platoon, and the said position-based driving strategy allows the distance between the vehicles in the vehicle platoon to vary between predetermined distance values related to the speed of the vehicle.

13. The method according to any one of claims 8-12,, wherein the position values pᵢ for the driving strategy are adapted to be determined by GPS and at least one of radar and wireless communication.

14. The method according to any one of claims 8-13, wherein the said target values bᵢ comprise at least one of speed targets vₖ, acceleration targets aₖ and separation targets dₖ.

15. A computer program (P) for a system (4), where the said computer program (P) comprises program code in order to cause the system (4) to carry out the steps according to claims 8-14.

16. A computer program product comprising a program code stored on a medium that can be read by a computer in order to carry out the method steps according to any one of claims 8-14.

## Patentansprüche

1. System (4) zur Steuerung eines Fahrzeugverbands, der zumindest ein Führungsfahrzeug und ein weiteres Fahrzeug umfasst, wobei die Fahrzeuge in dem Fahrzeugverband mit geringem Abstand zwischen einander gefahren werden, so dass der Luftwiderstand zwischen jedem in dem Fahrzeugverband befindlichen Fahrzeug reduziert wird, so dass ein niedrigerer Kraftstoffverbrauch erhalten wird, und wobei jedes Fahrzeug in dem Fahrzeugverband eine Positionsbestimmungseinheit (1) und eine Einheit (2) zur Drahtloskommunikation aufweist, wobei das System (4) umfasst:
- eine Fahrprofileinheit (6), die dazu eingerichtet ist, ein Fahrprofil für wenigstens ein Fahrzeug fₖ in dem Fahrzeugverband zu bestimmen, wobei das Fahrprofil Zielwerte bᵢ und zugehörige Positionen pᵢ für das Fahrzeug fₖ an Positionen längs eines Straßenhorizontes der vorausbefindlichen Straße enthält,
**dadurch gekennzeichnet, dass** das System ferner umfasst:
- eine Analyseeinheit (7), die eingerichtet ist zum:
- Ermitteln einer gemeinsamen positionsbasierten Fahrstrategie für die Fahrzeuge in dem Fahrzeugverband basierend auf zumindest dem Fahrprofil für das Fahrzeug fₖ,
- Generieren eines Fahrstrategiesignals, welches die gemeinsame positionsbasierte Fahrstrategie angibt, und
- Senden des Fahrstrategiesignals an alle Fahrzeuge in dem Fahrzeugverband, woraufhin die Fahrzeuge in dem Fahrzeugverband in Übereinstimmung mit der gemeinsamen positionsbasierten Fahrstrategie gesteuert werden, wobei die Zielwerte auf jedes der Fahrzeuge an jeder Position (pᵢ) angewandt werden, die einem Zielwert (bᵢ) zugehörig ist, wobei positionsbasierte Fahrstrategie bedeutet, dass dann, wenn das erste Fahrzeug in dem Fahrzeugverband seine Geschwindigkeit an einer bestimmten Position X in einer Kurve ändert, das zweite Fahrzeug dies nicht zur selben Zeit macht, sondern es stattdessen an genau derselben Stelle X macht, an der das erste Fahrzeug die Änderung ausgeführt hat.

2. System nach Anspruch 1, bei dem das Fahrzeug fₖ das Führungsfahrzeug ist.

3. System nach einem der Ansprüche 1 bis 2, bei dem die Fahrstrategie eine prädiktive Geschwindigkeitsregelungsstrategie (LAC) ist.

4. System nach Anspruch 1, umfassend, dass das Fahrprofil dazu konfiguriert ist, für das Führungsfahrzeug fortwährend dessen aktuelle Geschwindigkeit zu ermitteln, und dass die Positionsbestimmungseinheit die zugehörige Position zu bestimmen vermag, und zu gestatten, dass die aktuelle Geschwindigkeit den Zielwert bᵢ darstellt, der zusammen mit der zugehörigen Position die Fahrstrategie darstellt, und dies an alle Fahrzeuge in dem Fahrzeugverband weiterzugeben, die gemäß der Fahrstrategie gesteuert werden.

5. System nach einem der Ansprüche 1 bis 4, bei dem die Fahrstrategie einen Abstandsparameter d_{k,k+1} aufweist, der mit dem Abstand zu einem in dem Fahrzeugverband davor befindlichen Fahrzeug zusammenhängt, und die positionsbasierte Fahrstrategie es dem Abstand zwischen den Fahrzeugen in dem Fahrzeugverband erlaubt, zwischen mit der Geschwindigkeit der Fahrzeuge zusammenhängenden, vorbestimmten Abstandswerten zu variieren.

6. System nach einem der Ansprüche 1 bis 5, bei dem die Positionswerte für die Fahrstrategie dazu eingerichtet sind, durch die Positionsbestimmungseinheit (1) durch GPS und zumindest eines aus Radar und Drahtloskommunikation bestimmt zu werden.

7. System nach einem der Ansprüche 1 bis 6, bei dem die Zielwerte bᵢ zumindest eines umfassen aus Geschwindigkeitszielwerten vₖ, Beschleunigungszielwerten aₖ und Abstandszielwerten dₖ.

8. Verfahren zur Steuerung eines Fahrzeugverbands, der zumindest ein Führungsfahrzeug und ein weiteres Fahrzeug umfasst, wobei die Fahrzeuge in dem Fahrzeugverband mit geringem Abstand zwischen einander gefahren werden, so dass der Luftwiderstand zwischen jedem in dem Fahrzeugverband befindlichen Fahrzeug reduziert wird, so dass ein niedrigerer Kraftstoffverbrauch erhalten wird, und wobei jedes Fahrzeug in dem Fahrzeugverband eine Positionsbestimmungseinheit (1) und eine Einheit (2) zur Drahtloskommunikation aufweist, wobei das Verfahren umfasst:
- Festlegen (A2) eines Fahrprofils für wenigstens ein Fahrzeug fₖ in dem Fahrzeugverband, wobei das Fahrprofil Zielwerte bᵢ und zugehörige Positionen pᵢ für das Fahrzeug fₖ an Positionen entlang eines Straßenhorizonts der vorausbefindlichen Straße enthält,
**dadurch gekennzeichnet, dass** das Verfahren ferner umfasst:
- Ermitteln (A3) einer gemeinsamen positionsbasierten Fahrstrategie, die auf alle Fahrzeuge in dem Fahrzeugverband entlang des Straßenhorizonts angewandt zu werden vermag, wobei die Fahrstrategie das Fahrprofil umfasst,
- Weitergeben (A4) der Fahrstrategie an alle Fahrzeuge in dem Fahrzeugverband, woraufhin die Fahrzeuge in dem Fahrzeugverband in Übereinstimmung mit der gemeinsamen positionsbasierten Fahrstrategie gesteuert werden, wobei die Zielwerte auf jedes der Fahrzeuge in dem Fahrzeugverband an jeder Position (pᵢ) angewandt werden, die einem Zielwert (bᵢ) zugehörig ist, wobei positionsbasierte Fahrstrategie bedeutet, dass dann, wenn das erste Fahrzeug in dem Fahrzeugverband seine Geschwindigkeit an einer bestimmten Position X in einer Kurve ändert, das zweite Fahrzeug dies nicht zur selben Zeit macht, sondern es stattdessen an genau derselben Stelle X macht, an der das erste Fahrzeug die Änderung ausgeführt hat.

9. Verfahren nach Anspruch 8, bei dem das Fahrzeug fₖ das Führungsfahrzeug ist.

10. Verfahren nach einem der Ansprüche 8 bis 9, bei dem die Fahrstrategie eine prädiktive Geschwindigkeitsregelungsstrategie (LAC) ist.

11. Verfahren nach einem der Ansprüche 8 bis 10, umfassend, dass das Führungsfahrzeug fortwährend seine aktuelle Geschwindigkeit und zugehörige Position ermittelt, und es der aktuellen Geschwindigkeit gestattet, den Zielwert bᵢ darzustellen, der zusammen mit der zugehörigen Position die Fahrstrategie darstellt, und dies an alle Fahrzeuge in dem Fahrzeugverband weiterzugeben, die gemäß der Fahrstrategie gesteuert werden.

12. Verfahren nach einem der Ansprüche 8 bis 11, bei dem die Fahrstrategie einen Abstandsparameter d_{k,k+1} aufweist, der mit dem Abstand zu einem in dem Fahrzeugverband davor befindlichen Fahrzeug zusammenhängt, und die positionsbasierte Fahrstrategie es dem Abstand zwischen den Fahrzeugen in dem Fahrzeugverband erlaubt, zwischen mit der Geschwindigkeit der Fahrzeuge zusammenhängenden, vorbestimmten Abstandswerten zu variieren.

13. Verfahren nach einem der Ansprüche 8 bis 12, bei dem die Positionswerte pᵢ für die Fahrstrategie dazu eingerichtet sind, durch GPS und zumindest eines aus Radar und Drahtloskommunikation bestimmt zu werden.

14. Verfahren nach einem der Ansprüche 8 bis 13, bei dem die Zielwerte bᵢ zumindest eines umfassen aus Geschwindigkeitszielwerten vₖ, Beschleunigungszielwerten aₖ und Abstandszielwerten dₖ.

15. Computerprogramm (P) für ein System (4), wobei das Computerprogramm (P) Programmcode umfasst, um das System (4) dazu zu veranlassen, die Schritte gemäß den Ansprüchen 8 bis 14 auszuführen.

16. Computerprogrammprodukt mit einem Programmcode, der auf einem Datenträger gespeichert ist, der von einem Computer gelesen werden kann, um die Verfahrensschritte gemäß einem der Ansprüche 8 bis 14 auszuführen.

## Revendications

1. Système (4) pour commander un peloton de véhicules qui comprend au moins un véhicule de tête et un véhicule supplémentaire, dans lequel les véhicules dans le peloton de véhicules sont conduits avec une courte distance entre chacun d'entre eux de sorte que la résistance à l'air entre chaque véhicule compris dans le peloton de véhicules soit réduite de sorte qu'une consommation de carburant inférieure soit obtenue, et dans lequel chaque véhicule dans le peloton de véhicule a une unité de positionnement (1) et une unité (2) pour une communication sans fil, dans lequel le système (4) comprend :
- une unité de profil de conduite (6) qui est configurée pour déterminer un profil de conduite pour au moins un véhicule fₖ dans le peloton de véhicules, dans lequel le profil de conduite contient des valeurs cibles bᵢ et des positions associées pᵢ pour le véhicule fₖ à des positions le long d'un horizon routier de la route à parcourir ;
**caractérisé en ce que** le système comprend en outre :
- une unité d'analyse (7) qui est configurée pour :
- déterminer une stratégie de conduite sur base d'une position commune pour les véhicules dans le peloton du véhicule, sur base d'au moins le profil de conduite pour le véhicule fₖ ;
- générer un signal de stratégie de conduite qui indique la stratégie de conduite sur base d'une position commune, et
- transmettre le signal de stratégie de conduite à tous les véhicules dans le peloton de véhicules, après quoi les véhicules dans le peloton de véhicules sont commandés selon la stratégie de conduite basée sur la position commune, dans lequel lesdites valeurs cibles sont appliquées à chacun des véhicules à chaque position (pᵢ) qui est associée à une valeur cible (bᵢ), dans lequel une stratégie de conduite basée sur la position signifie que si le premier véhicule dans le peloton change sa vitesse-à une certaine position X dans un virage, le deuxième véhicule n'effectue pas cela en même temps, mais l'effectue plutôt exactement au même point X sur lequel le premier véhicule a effectué le changement.

2. Système selon la revendication 1, dans lequel ledit véhicule fₖ est le véhicule de tête.

3. Système selon l'une quelconque des revendications 1 -2, dans lequel ladite stratégie de conduite est une stratégie de régulation de vitesse prédictive (LAC).

4. Système selon la revendication 1, comprenant que le profil de conduite est configuré pour déterminer continuellement pour le véhicule de tête sa vitesse actuelle et que l'unité de positionnement est adaptée pour déterminer la position associée, et pour permettre à ladite vitesse actuelle de constituer ladite valeur cible bᵢ, qui, conjointement avec la position associée, constitue la stratégie de conduite, et pour transmettre celle-ci à tous les véhicules dans le peloton de véhicules, qui sont commandés selon la stratégie de conduite.

5. Système selon l'une quelconque des revendications 1 -4, dans lequel la stratégie de conduite comprend un paramètre de distance d_{k,k+1} lié à la distance d'un véhicule à l'avant dans le peloton de véhicules, et ladite stratégie de conduite sur base de la position permet à la distance entre les véhicules dans le peloton de véhicules de varier entre des valeurs de distance prédéterminées liées à la vitesse du véhicule.

6. Système selon l'une quelconque des revendications 1 -5, dans lequel les valeurs de position pour la stratégie de conduite sont adaptées pour être déterminées par l'unité de positionnement (1) par GPS et au moins un parmi un radar et une communication sans fil.

7. Système selon l'une quelconque des revendications 1 -6, dans lequel lesdites valeurs cibles bi comprennent au moins une parmi des cibles de vitesse vₖ, des cibles d'accélération aₖ et des cibles de séparation dₖ.

8. Procédé pour commander un peloton de véhicule qui comprend au moins un véhicule de tête et un véhicule supplémentaire, dans lequel les véhicules dans le peloton de véhicules sont conduits avec une courte distance entre chacun d'entre eux de sorte que la résistance à l'air entre chaque véhicule compris dans le peloton de véhicules soit réduite de sorte qu'une consommation de carburant inférieure soit obtenue, et dans lequel chaque véhicule dans le peloton de véhicules a une unité de positionnement (1) et une unité (2) pour une communication sans fil, dans lequel le procédé comprend de :
- déterminer (A2) un profil de conduite pour au moins un véhicule fₖ dans le peloton de véhicules, dans lequel le profil de conduite contient des valeurs cibles bᵢ et des positions associées pi pour le véhicule fₖ à des positions le long d'un horizon routier de la route à parcourir ;
**caractérisé en ce que** le système comprend en outre de :
- déterminer (A3) une stratégie de conduite sur base d'une position commune adaptée pour être appliquée pour tous les véhicules dans le peloton de véhicules le long de l'horizon routier, dans lequel la stratégie de conduite comprend ledit profil de conduite ;
- passer (A4) la stratégie de conduite à tous les véhicules dans le peloton de véhicules, après quoi les véhicules dans le peloton de véhicules sont commandés selon la stratégie de conduite sur base d'une position commune, dans lequel lesdites valeurs cibles sont appliquées pour chacun des véhicules dans le peloton de véhicules à chaque position (pᵢ) associée à une valeur cible (bᵢ), dans lequel une stratégie de conduite sur base d'une position signifie que si le premier véhicule dans le peloton de véhicules change sa vitesse à une certaine position X dans un virage, le deuxième véhicule n'effectue pas cela en même temps, mais l'effectue plutôt exactement au même point X sur lequel le premier véhicule a effectué le changement.

9. Procédé selon la revendication 8, dans lequel ledit véhicule fₖ est le véhicule de tête.

10. Procédé selon l'une quelconque des revendications 8-9, dans lequel ladite stratégie de conduite est une stratégie de régulation de vitesse prédictive (LAC).

11. Procédé selon l'une quelconque des revendications 8-10, comprenant que le véhicule de tête détermine continuellement sa vitesse actuelle et sa position associée, et pour permettre à ladite vitesse actuelle de constituer ladite valeur cible bᵢ, qui, conjointement avec la position associée, constitue la stratégie de conduite, et de transmettre celle-ci à tous les véhicules dans le peloton de véhicules, qui sont commandés selon la stratégie de conduite.

12. Procédé selon l'une quelconque des revendications 8-11, dans lequel la stratégie de conduite comprend un paramètre de distance d_{k,k+1} lié à la distance d'un véhicule à l'avant dans le peloton de véhicules, et ladite stratégie de conduite sur base de la position permet à la distance entre les véhicules dans le peloton de véhicules de varier entre des valeurs de distance prédéterminées liées à la vitesse du véhicule.

13. Procédé selon l'une quelconque des revendications 8-12, dans lequel les valeurs de position pᵢ pour la stratégie de conduite sont adaptées pour être déterminées par GPS et au moins un parmi une communication radar et sans fil.

14. Procédé selon l'une quelconque des revendications 8-13, dans lequel lesdites valeurs cibles bᵢ comprennent au moins une parmi des cibles de vitesse vₖ, des cibles d'accélération aₖ et des cibles de séparation dₖ.

15. Programme informatique (P) pour un système (4), où ledit programme informatique (P) comprend un code programme afin d'amener le système (4) à mettre en œuvre les étapes selon l'une quelconque des revendications 8-14.

16. Produit de programme informatique comprenant un code de programme stocké sur un support pouvant être lu par un ordinateur afin de mettre en œuvre les étapes du procédé selon l'une quelconque des revendications 8-14.
